# EUROPEAN PATENT SPECIFICATION

(11) **EP 0 647 552 B1**
(45) Date of publication and mention of the grant of the patent: **07.01.1999**
(21) Application number: 94115791.9
(22) Date of filing: 06.10.1994
(51) Int. Cl.: B61B 13/08, B61C 13/04, B60L 5/00

(54) **A transporting system**
Transportsystem
Système de transport

(30) Priority: 07.10.1993 JP 251890/93; 07.10.1993 JP 251892/93
(43) Date of publication of application: 12.04.1995
(73) Proprietor: DAIFUKU CO., LTD., Osaka-shi, Osaka (JP)
(72) Inventor: Taguchi, Kazuhiro, Niwa-gun, Aichi (JP); Yamada, Yoshihiko, Inuyama-shi, Aichi (JP)
(74) Representative: Füchsle, Klaus, Dipl.-Ing.

(56) References cited:
- EP-A- 0 372 387
- GB-A- 2 004 827
- US-A- 3 845 721
- US-A- 4 766 993

## Description

### BACKGROUND OF THE INVENTION

### FIELD OF THE INVENTION

The present invention relates to a transporting system of the type as specified in the preamble of claim 1, and to a trnasporting system installed in an automatic warehouse.

### PRIOR ART

A transporting system of the type mentioned hereinabove is known from US-A-7,766,993.

More generally, in a conventional type of a transporting system for transportation of goods or cargos, a shelving-and-unshelving and transporting electric car travels on rails which are installed along a car passage between adjacent racks forming for example an automatic warehouse. Generally in the driving system employed in the known transporting systems, an electric motor drives wheels of the transporting electric car of the so-called traction wheel type. The contact type power supply system for the electric car consists of an electric feeder line extending along the car passage and a collecting unit carried by the car so as to be in a sliding contact with the feeder line.

In the described transporting systems, the driving system of traction wheel type and the contact type power supply system have caused some problems. For example, the electric car will inevitably make a considerable noise when it moves, though the car cannot run fast. Due to dusts produced by such a supply system, and/or other obstacles, it often fails to ensure a smooth and constant supply of electric current to the car.

To diminish the noise and raise the running speed of the electric car, it may be possible to employ the driving system of a certain linear motor type. A linear motor body in this system will be mounted on and fixed to the electric car, with a secondary conductor cooperating with the linear motor body being secured along the car passage. This motor body must always be separated a predetermined small distance from the secondary conductor. However, abrasion of outer peripheries of wheels and/or any obstacle intervening between any running wheel and the passage surface will result in a variation in the effective height of the electric car or particularly of the linear motor body. In such an event, the predetermined distance could not be maintained constant, or the linear motor body would come into a direct contact with the secondary conductor, if the worst happens.

Alternatively, the aforementioned drawbacks inherent in the prior art systems may be resolved in another way. An induction wire line ( e.g., the so-called Lits wire ) as a non-contact type power source may be installed in and along each car passage, with at least one induction coil being carried by the car. In a case wherein many passages are formed one above another in a cubic and automatic warehouse, every passage requires one panel board for power supply, thereby noticeably raising construction cost.

### SUMMARY OF THE INVENTION

A first object of the present invention is therefore to provide a transporting system which can operate in a more reliable manner, more quietly, much faster and more effectively to keep clean an environment around the system.

A second object is to provide a transporting system comprising an electric car equipped with a linear motor body to cooperate with a secondary conductor disposed along a car passage so as to form a driving system, such that a small clearance is kept invariable between the motor body and the conductor.

A third object is to provide a transporting system employable in a cubic and automatic warehouse which has a plurality of car passages one above another, such that an effective but inexpensive power supply system can drive electric cars along the passages to shelve or unshelve goods or cargoes stored in the warehouse.

The first object will be achieved herein by providing a transporting system which comprises: a pair of left and right guide rails; a transporting electric car having wheels supported by the rails and guided therealong; a driving system to drive the electric car; and a power supply system for the driving system, wherein the driving system comprises a secondary conductor horizontally secured to one of the guide rails and a linear motor body installed in the electric car so as to face the secondary conductor, and wherein the power supply system comprises as a non-contact power supply a pair of induction wire lines secured to and along the other guide rail and at least one induction coil intervening there-between, with the induction wire lines being disposed horizontally, side by side and in parallel with each other, and the induction coil being fixed to and carried by the electric car.

The transporting electric car may comprise two pairs of positioning rollers arranged longitudinally and transversely of the electric car. A shaft rotatably supporting each positioning roller extends vertically so that the latter is kept in a rotating contact with an inner vertical end surface of the corresponding guide rail. Two of the positioning rollers are located adjacent to the guide rail along which the power supply system extends, and are kept in their fixed transversal position. The other two rollers are located adjacent the other guide rail along which the driving system extends, and are urged to the guide rail by respective springs so as to be horizontally displaceable within an allowed range transversely of the electric car.

Each guide rail may be L-shaped in cross section and be composed of a vertical web portion secured to a fixed supporting member, and a horizontal rail portion extending from a lower end of the vertical portion. Upper surfaces of the horizontal rail portions support the secondary conductor in the driving system and the induction line in the power supply system. The wheels of the electric car roll on upper end surfaces of the vertical portions. Each positioning roller is kept in a rotating contact with an inner vertical end surface of the corresponding vertical web portion.

Alternatively, each guide rail may be of a reversed L-shape in cross section and be composed of a vertical web portion secured to a fixed supporting member, and a horizontal rail portion extending from an upper end of the vertical portion. In this alternative case, the secondary conductor in the driving system and the induction line in the power supply system are disposed below the horizontal rail portions, whose upper surfaces support the electric car wheels. However, each positioning roller is kept in a rotating contact with an inner vertical end surface of the corresponding vertical portion, similarly to the first case mentioned above.

The second object of the present invention will be achieved herein by providing a transporting system which additionally comprises: a base plate holding the linear motor body and extending longitudinally of the guide rails; spacing rollers rotatably attached to the base plate to keep constant a distance between the linear motor body and the secondary conductor; and upright guide rods also attached to the base plate and vertically penetrating a frame bottom of the electric car so as to be displaceable up and down relative to the frame bottom, wherein the spacing rollers are journaled on respective horizontal shafts arranged along opposite sides of the base plate and at intervals longitudinally of the guide rails, and each of the guide rods has a free end above the frame bottom, the free end having a stopper secured thereto to prevent the guide rod from slipping off the frame bottom.

The linear motor body may be placed above the guide rail, with the spacing rollers bearing against an upper surface of the guide rail due to gravitational force. Alternatively, the linear motor body may be placed below the guide rail, with the spacing rollers bearing against a lower surface of the guide rail due to magnetic attraction as will be detailed hereinbelow.

The third object of the present invention will be achieved herein by providing a transporting system which is installed in an automatic warehouse and comprises: a plurality of car passages; a pair of left and right guide rails extending along each car passage; a plurality of transporting electric cars each having wheels supported by the rails and guided therealong; a driving system to drive each electric car; and a power supply system for the driving system in each electric car, wherein the power supply systems constructed as non-contact type power sources do comprise pairs of induction wire lines which are connected in series one to another and electrically connected to a common panel board. In a case wherein a considerable large number of the car passages are involved, they may be grouped into some blocks each consisting of adjacent several, or a few, upper and lower car passages. The pairs of induction wire lines in each block will thus be connected in series one to another and electrically connected to a common panel board.

In summary, the transporting system comprises a linear motor as the driving system for the transporting electric car, and a non-contact power supply thereto is provided so that the noise is reduced in spite of an increased running speed. This system can operate in a more reliable manner, and an environment around the system can be kept much cleaner than in case of using the prior art systems. In particular, the driving system of linear motor type is located on one of lateral sides of the electric car, whereas the non-contact power supply system composed of induction lines and induction coils is located at the other lateral side opposite to the driving system. Such a layout is highly effective to protect the systems from their mutual magnetic interference and thus to ensure smooth operation of the system. It is a further important feature that the secondary conductor supported by one of the guide rails lies in a horizontal plane, and the pair of induction wire lines supported by the other guide rail stand side by side also in a horizontal plane. Thanks to this feature, an overall volume of the system including the guide rails is small enough to be useful as a shelving-and-unshelving transporting system in automatic warehouses.

The upright guide rods support the linear motor body on the transporting electric car and permit the body to ascend and descend an allowed distance. This feature enables the spacing rollers on the base plate of the linear motor body to be in a continuous contact with the guide rail surface. Thus, neither the abrasion of electric car wheels nor any obstacles ridden thereby will cause any problems such a direct contact of the linear motor body ( viz. induction coils ) with the secondary conductor on the guide rail. Further, the motor body can readily be mounted onto or dismounted off the electric car by reversibly inserting the guide rods in and through openings formed in the car frame bottom. This feature is advantageous in that the structure for installing the linear motor is simplified and rendered inexpensive. Moreover, the base plate of motor body has the plurality of the spacing rollers arranged its lateral sides and longitudinally of the rails. The spacing rollers journaled on the respective shafts do function to keep constant the small clearance between the motor body and the secondary conductor fixed to the guide rail. Those spacing rollers cooperate with the plurality of the ascendable-and-descendable guide rods arranged longitudinally of the rails, so that even any elongate motor body extending over the full length of electric car can be held thereon stably in an accurate position.

The respective induction wire lines for the non-contact power supply disposed along the car passages need not be connected to different panel boards supplying a high frequency current, but the adjacent upper and lower induction lines are connected in series one to another to be energized by the single supply board. Thus, the number of necessary panel board is reduced to lower the construction cost, and the cost of wiring works is also reduced herein.

Although all of the induction lines may be in series connected to the one power supply board, they can be grouped into some blocks. The adjacent upper and lower induction lines in each group may be connected in series one to another and to the single supply board. Consequently, even if the overall length of the car passages within a large-sized automatic warehouse is extremely great, the construction cost can be suppressed. In such a case, there is no fear of impairing the efficiency of non-contact power supply to the electric cars due to the excessive length of the induction lines connected to one common panel board.

### BRIEF DESCRIPTION OF THE DRAWINGS

In the drawings showing some embodiments of the present invention:
Fig. 1 is a plan view of an system in its entirety in an embodiment;
Fig. 2 is a front elevation of the system shown partly in cross section;
Fig. 3 is a plan view of essential parts of a transporting electric car employed in the system;
Fig. 4 is a plan view of a linear motor body as the driving system incorporated in the electric car;
Fig. 5 is a front elevation corresponding to Fig. 2, but showing parts on an enlarged scale;
Fig. 6 is a cross-sectional elevation of a guide rail employed in the system;
Fig. 7 is a front elevation of the system in accordance with a modified embodiment shown partly in cross section;
Fig. 8 is a schematic side elevation of an automatic warehouse in which a plurality of upper and lower car passages are formed; and
Fig. 9 shows a non-contact power supply circuit in the automatic warehouse.

### THE PREFERRED EMBODIMENTS

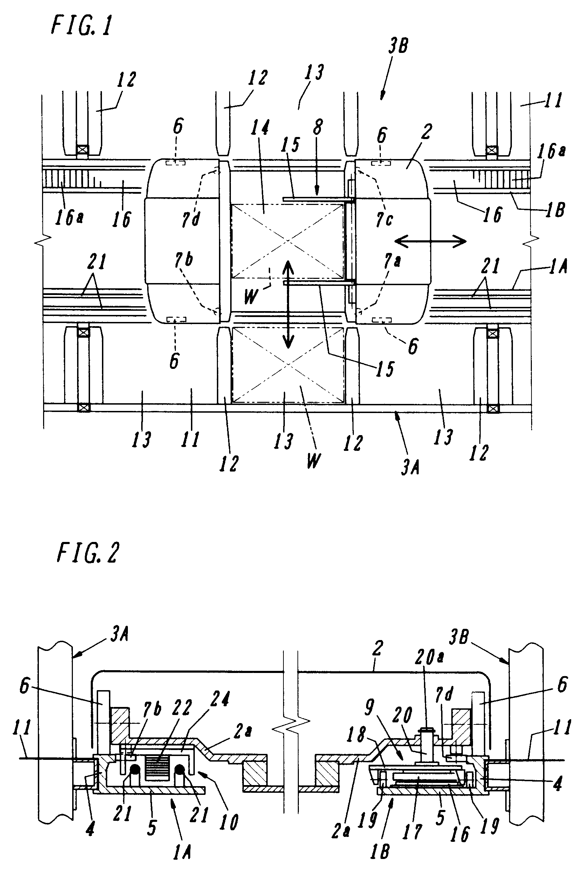

In Figs. 1 and 2 showing an embodiment of the invention, the reference numerals 1A and 1B denote a pair of left and right guide rails for a transporting electric car 2. The guide rails 1A and 1B, which are fixed to racks 3A and 3B at portions thereof defining therebetween a passage for the electric car, extend horizontally in a common plane. Each of the guide rails is made of aluminum or the like material, and is L-shaped in cross section to have an outer vertical web portion 4 at which the guide rail is secured to the corresponding rack. A horizontal rail portion 5 of each guide rail protrudes horizontally and inwardly from a lower end of the vertical web portion 4.

The transporting electric car 2 has four wheels 6 rotatably moving on and along the guide rails 1A and 1B, in addition to four positioning rollers 7a - 7d journaled on respective vertical shafts. The car 2 further has a transferring means 8 for shelving and unshelving packaged cargoes or wares, a driving system 9 for driving the car to run, and a power supply system 10 for the driving system. The transferring means 8 is adapted to transversely transfer the ware 'W' between the shelves 13 in the racks 3A and 3B and a ware-supporting top 14 of the car 2. A pair of liftable swing arms 15 of the transferring means 8 in this embodiment are designed to grip the ware 'W' at its front and rear end surfaces perpendicular to a direction in which the car 2 reciprocates to transfer the ware. Each shelf 13 in the racks 3A and 3B is formed on a base 11 and between two adjacent partitions 12.

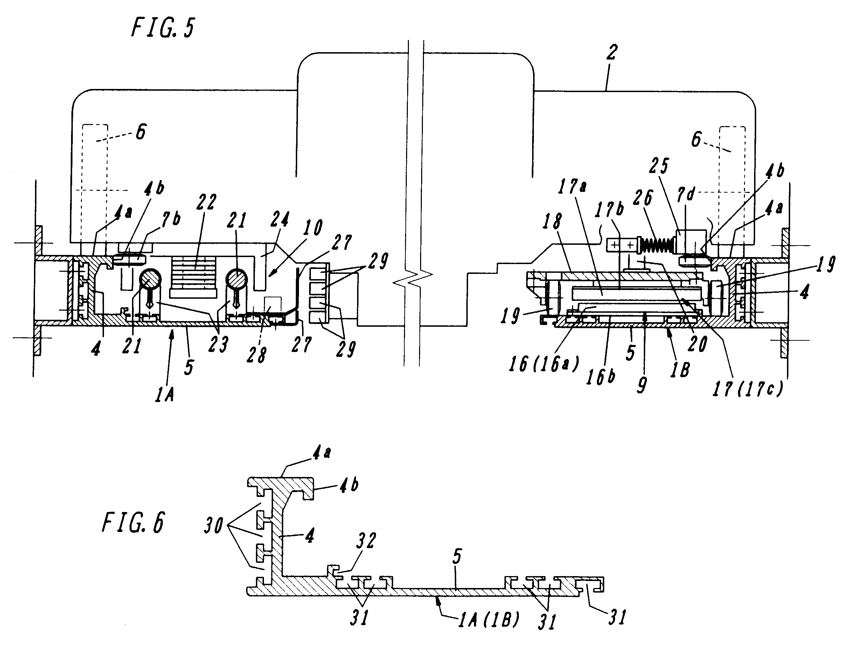

The driving system 9 is of the linear motor type having a primary induction member installed in the electric car, and comprises a horizontal secondary conductor 16 secured to the horizontal rail portion 5 of the one guide rail 1B. The driving system further comprises a linear motor body 17 disposed below and adjacent to the bottom of the electric car 2. The linear motor body is disposed above the conductor 16 so as to face same. As shown in Figs. 1 and 5, the secondary conductor 16 in this embodiment is composed of a plurality of rectangular and flat magnets 16a, whose upper and lower surfaces are N and S poles, or vice versa. The upper N poles and the upper S poles of those magnets arranged longitudinally of the rail and fixed to a base strip 16b do alternate repeatedly and regularly with one another. A multi-layer material composed of a nonmagnetic but electrically conductive layer of aluminum or the like and a magnetic and conductive layer of iron or the like may substitute for the row of magnets as the secondary conductor.

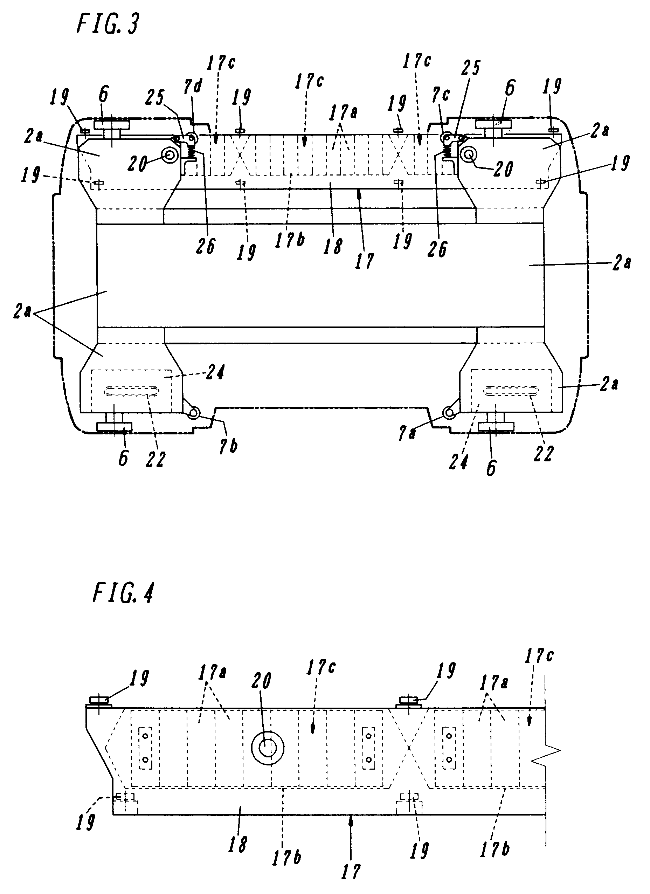

Figs. 3 to 5 shows that the linear motor body 17 comprises a plurality of primary units 17c ( e.g., three primary units in the illustrated embodiment ) disposed along the rail. Each of the primary units 17c consists of a plurality of induction coils 17a which are located side by side below a coil yoke plate 17b and in a longitudinal direction of the rail to thereby form a series of coils. The yoke plate is disposed below and attached to a base plate 18 which also extends longitudinally of the rail. Spacing rollers 19 rotatably supported by horizontal shafts are disposed at proper intervals along the opposite lateral sides of the base plate 18. Those spacing rollers roll on and along the horizontal rail portion 5 of the guide rail 1B. Vertically displaceable upright guide rods 20 protruding from two regions of the base plate 18 are spaced a distance in the longitudinal direction of this base plate. Fig. 2 shows that the guide rods 20 penetrate a frame 2a of the electric car 2 so as to ascend and descend relative to the frame. A stopper ring 20 attached to an upper free end of each guide rod prevents it from slipping off the frame. Thus, the linear motor body 17 can descend due to gravitational force such that the spacing rollers 19 always abut against the horizontal rail portion 5 of the guide rail 1B. A constant small clearance is assured in this manner between the linear motor body and the secondary conductor ( viz. upper surfaces of the magnets ) facing the motor body.

On the other hand, the power supply system 10 as a non-contact power source shown in Figs. 2, 3 and 5 does comprise a pair of induction wire lines ( viz. Litz wire lines ) 21 and two induction coils 22, one located near a front end and the other near a rear end of the electric car 2. The induction wire lines 21 extending longitudinally of the other guide rail 1A and secured to a horizontal rail portion thereof are arranged side by side and spaced a distance from each other transversely of the rail. A row of the two conduction coils 22 intervene between the induction wire lines 21. The reference numeral 23 denotes hangers located at given intervals along the guide rail 1A, to thereby form a row along each induction wire line 21. Those hangers 23 for securing the induction lines in the described positions are fixed to the horizontal portion 5 of the rail 1A so as to stand upright. The further reference numeral 24 denotes coil yokes to which the respective induction coils 22 are fixed, with the yokes being in turn fixed to the bottom of the car frame 2a.

As shown in Fig. 5, the four wheels 6 of the transporting electric car 2 roll on and along the upper end surfaces 4a of the vertical web portions 4 of the guide rails 1A and 1B. The four positioning rollers 7a - 7d abut against the upper and inner vertical surfaces 4b of the web portion 4. Two of such positioning rollers 7a and 7b are in contact with the guide rail 1A along which the power supply system 10 is formed. The positioning rollers 7a and 7b are supported by shafts fixed to given portions of the car frame 2a. The other two positioning rollers 7c and 7d located near the driving system 9 are in contact with the other guide rail 1B. Those latter rollers 7c and 7d are rotatably supported by movable arms 25, respectively, so as to be horizontally displaceable transversely of the guide rail. A spring 26 always urges each movable arm 25 so that the rollers 7c and 7d are pressed to the upper and inner vertical surface 4b of the vertical web portion 4.

By virtue of this feature, the electric car 2 as a whole will be urged towards the guide rail 1A where the power supply system is located. The positioning rollers 7a and 7b are thus forced into a continuous contact with the upper and inner vertical surface 4b of the vertical web portion 4 of the guide rail 1A. Even if a small variation is present in distance between the guide rails 1A and 1B, causing a slight transverse rocking of the electric car, the position thereof relative to the guide rail 1A along which the power supply system 10 extends will be kept invariable. Thus, the induction coils 22 can be kept at their absolutely correct position relative to the induction wire lines 21.

To ensure such an effect, a detectable plate 27 as well as a cam 28 acting on limit switches for accurate control of the running electric car 2 may preferably be attached to the guide rail 1A accompanied by the power supply system 10. The reference numeral 29 depots photoelectric sensors carried by the electric car 2 so as to face the detectable plate 27 sideways in a horizontal direction.

The guide rails 1A and 1B are of the same shape, but disposed symmetrically with one another. Fig. 6 shows that an outer side of each vertical web portion 4 has a plurality of parallel and horizontal grooves 30 formed one above another. Tapped plates and/or nuts inserted in the grooves are slidable longitudinally of the guide rail so as to mate bolts or the like which fasten the guide rail to the rack, at any desired locations along said guide rail. The guide rail has further grooves 31 formed in the horizontal rail portion 5, some of them located on an upper side thereof, and the other opening downwards along an inner edge of said portion. Those further grooves 31 are used to hold at any locations along the guide rail some tapped plates and/or nuts, which fasten thereto the secondary conductor 16 in the driving system 9, the hangers 23 for the induction lines in the power supply system 10, the detectable plate 27 and the cam 28. An additional groove 32, which is formed along a basal region of the horizontal rail portion 5, opens inward to receive a lateral side of the base strip holding the magnets serving as the secondary conductor 16.

In operation of the system as constructed above, a high-frequency current which is supplied to the induction wire lines 21 in the power supply system 10 will produce a magnetic field therearound. Due to this magnetic field, an electromotive force will be generated in the induction coils 22 carried by the electric car 2. In other words, the non-contact power supply to the electric car 2 is effected by the induction wire lines 21 and through the induction coils 22. Consequently, the linear motor body 17 in the driving system 9 will receive the thus induced current, which causes a magnetic reaction between the motor body and the secondary conductor 16. This magnetic reaction brings about a repellent or attracting force in a desired direction such that the electric car 2 is forced to move fore and aft along the guide rails 1A and 1B.

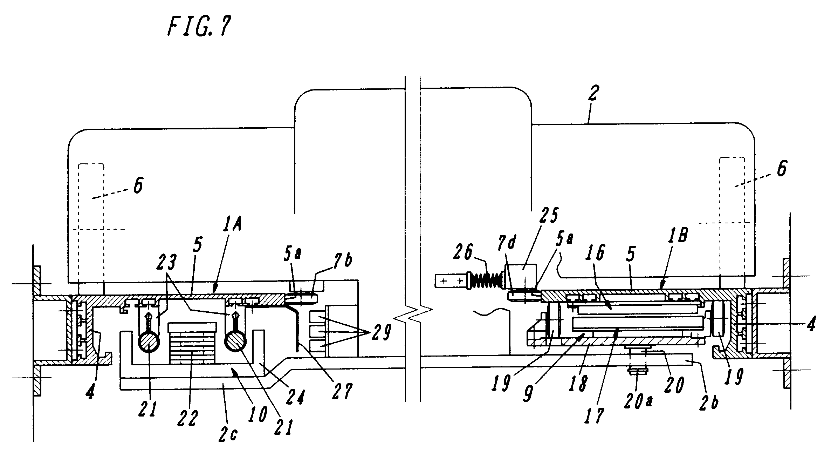

Fig. 7 shows a modified embodiment in which the guide rails 1A and 1B are reversed upside down. In this case, each horizontal rail portion 5 extends inwardly from the upper end of the vertical web portion 4, so that the wheels 6 of the transporting electric car 2 roll on the upper side of said horizontal portions. The positioning rollers 7a - 7d are kept in contact with the vertical surfaces of the inner ends of horizontal rail portions 5. The secondary conductor 16 in the driving system 9 and the induction wire lines 21 in the power supply system 10 are disposed below said horizontal portions. Correspondingly, bottom frames 2b and 2c of the electric car 2 are cantilevered beneath the guide rails 1A and 1B. The linear motor body 17 and the induction coils 22 for the power supply system 10 are supported on the bottom frames.

In the modified embodiment summarized above, magnetic attraction taking place between the secondary conductor 16 and the linear motor body 17 will urge upwards the latter. The spacing rollers 19 rotatably attached to the base plate 18 supporting the motor body 17 will be caused to contact the lower surface of the horizontal rail portion 5 of the guide rail 1B. Similarly to the first described embodiment, the clearance is kept constant between the motor body 17 and the secondary conductor 16. The linear motor body 17 will however descend to its lowest home position, when it is disenergized.

Although the ware transferring means 8 in the described embodiments comprises the liftable arms, the transporting electric car may be equipped with any other transferring means such as a running fork, or may be of the stacker-crane type having a liftable carriage.

There may be a certain case in which the described racks 3A and 3B have their shelves arranged three-dimensionally. In other words, those shelves are formed in each rack not only fore and aft along the passage for the electric car 2 but also up and down perpendicular there-to. If the electric car has the transferring means 8 capable of transferring the wares only between the car and the adjacent one shelf 13, then car passages ( viz. pairs of the guide rails 1A and 1B ) must be provided for each horizontal row of the vertically arranged shelves 13. Thus, the so-called automatic warehouse will be constructed.

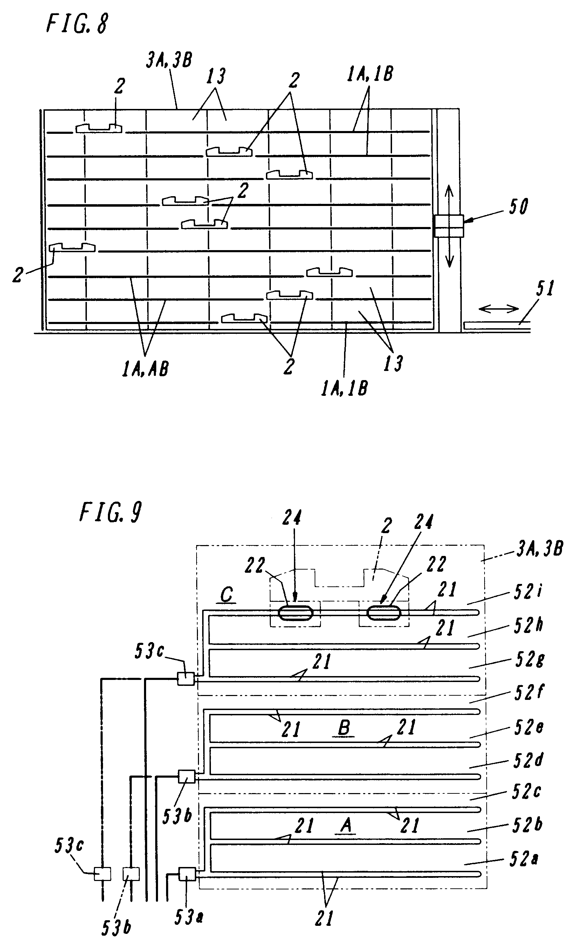

For example, one pair of guide rails 1A and 1B defining one passage for the electric car 2 may be provided in a manner shown in Fig. 8 for each horizontal row of the shelves 13. In this case, a plurality of electric cars 2 are used, one for each passage. An elevator 50 may be constructed along one ends of the rows of the shelves, and a conveyor 51 for storing and delivering the wares may be connected to a lower end of the elevator 50.

The ware to be stored in the racks 3A and 3B will be transported by the conveyor 51 and then into the elevator 50, before raised to a level corresponding to the shelf 13 to receive the ware. The electric car 2 allotted to the same level as this shelf 13 will take the ware from the elevator 50. The car will then travel to a location of the shelf 13 in the rack 3A or 3B, so that the transferring means 8 subsequently transfers this ware from the car onto the shelf. Delivery of the wares out of the warehouse will be done by carrying out these steps in a reverse order.

In the described automatic warehouse, the car passages 52a - 52i located one above another may be grouped into some blocks 'A' - 'C' each comprising a plurality of neighboring passages ( e.g., three passages in the illustrated example ), as shown in Fig. 9. One pair of induction lines 21 as the non-contact power source will be installed in each car passage. The pairs of those lines in each block may be connected in series and to a common power supply panel board 53a, 53b or 53c. Those panel boards may be located at respective heights corresponding to the blocks 'A' - 'C'. Alternatively, all the panel boards may be placed on the ground as shown by the phantom lines. It is preferable to design the number of car passages included in each group in such a manner that the overall length of the induction lines connected in series does not reversely affect the efficiency of inducing the electromotive force.

The automatic warehouse shown in Fig. 8 comprises the passages for the transporting electric cars 2 wherein each passage corresponds to one rows of the shelves 13 in the racks 3A and 3B. The number of passages for the car 2 can however be smaller than that of the rows of shelves 13 formed in the racks 3A and 3B, if the electric cars 2 of the so-called stacker-crane type are employed and the liftable carriage of each car can serve for a plurality of shelves 13 located one on another.

## Claims

1. A transporting system comprising:
a pair of left and right guide rails (1A, 1B);
a transporting electric car (2) having wheels (6) supported by the rails (1A, 1B) and guided therealong;
a driving system (9) for driving the electric car (2), said driving system (9) being of a linear motor type and comprising a linear motor body (17) installed in said electric car (2); and
a power supply system (10) for the driving system (9);
***characterized in that***
said driving system (9) comprises a secondary conductor (16) horizontally secured only to one (1B) of the guide rails (1A, 1B);
said linear motor body (17) installed in the electric car is arranged so as to face the secondary conductor (16);
said power supply system (10) comprises as a non-contact power supply a pair of induction wire lines (21) secured to and along the other guide rail (1A) opposed to said one guide rail (1B) which has the secondary conductor (16) secured thereto; and
at least one induction coil (22) is provided for intervening therebetween, with the induction wire lines (21) being disposed horizontally side by side and in parallel with each other, said induction coil (22) being fixed to and carried by said electric car (2).

2. A transporting system as defined in claim 1, wherein the transporting electric car (2) comprises two pairs of front and rear positioning rollers (7a, 7ab, 7c, 7d) arranged on both lateral sides of the electric car so as to be kept in a rotating contact with inner vertical end surfaces of the left and right guide rails, in which one pair of the positioning rollers (7a, 7b) on one lateral side are located adjacent to the guide rail (1A) associating with the power supply system (10), and are kept in their fixed transversal position, while another pair of front and rear rollers (7c, 7d) on the other lateral side are located adjacent the other guide rail (1B) associating with the driving system (9), and are urged to the guide rail (1B) by respective springs (26) so as to be horizontally displaceable within an allowed range transversely of the electric car (2).

3. A transporting system as defined in claim 2, wherein each of the guide rails (1A, 1B) is L-shaped in cross section and composed of a vertical web portion (4) secured to a fixed supporting member, and a horizontal rail portion (5) extending from a lower end of the vertical portion (4), wherein upper surfaces of the horizontal rail portions (5) are arranged to support the secondary conductor (16) of the driving system (9) and the induction wire lines (21) of the power supply system (10), the wheels (6) of the electric car (2) roll on upper end surfaces (4a) of the vertical portions (4), and each of the positioning rollers (7a, 7b, 7c, 7d) is kept in a rotating contact with an inner vertical end surface (4b) of the corresponding vertical web portion (4).

4. A transporting system as defined in claim 2, wherein each of the guide rails (1A, 1B) is of a reversed L-shape in cross section and composed of a vertical web portion (4) secured to a fixed supporting member, and a horizontal rail portion (5) extending from an upper end of the vertical portion (4), wherein the secondary conductor (16) of the driving system (9) and the induction wire lines (21) of the power supply system (10) are disposed below the horizontal rail portions (5), whose upper surfaces support the electric car wheels (6), and each of the positioning rollers (7a, 7b, 7c, 7d) is kept in a rotating contact with an inner vertical end surface (5a) of the corresponding horizontal rail portion (5).

5. A transporting system as defined in any of the preceding claims, further comprising
a base plate (18) holding the linear motor body (17) and extending longitudinally of the guide rail (1B);
spacing rollers (19) rotatably attached to the base plate (18) to keep constant a distance between the linear motor body (17) and the secondary conductor (16); and
upright guide rods (20) also attached to the base plate (18) and vertically penetrating a frame bottom (2a) of the electric car (2) so as to be displaceable up and down relative to the frame bottom (2a);
wherein the spacing rollers (19) are journaled by respective horizontal shafts on opposite sides of the base plate (18) and at intervals longitudinally of the guide rail (1B), and each of the guide rods (20) has a free end having a stopper (20a) secured thereto to prevent the guide rod (20) from slipping off the frame bottom (2a).

6. A transporting system as defined in claim 5, wherein the linear motor body (17) is placed above the guide rail (1B), with the spacing rollers (19) bearing against an upper surface of the guide rail (1B) due to gravitational force.

7. A transporting system as defined in claim 5, wherein the linear motor body (17) is placed below the guide rail (1B), with the spacing rollers (19) bearing against a lower surface of the guide rail (1B) due to magnetic attraction.

8. A transporting system according to one of the claims 1 to 7 provided for being installed in an automatic warehouse and comprising:
a plurality of car passages (52a to 52i);
a pair of left and right guide rails (1A, 1B) extending along each car passage;
a plurality of transporting electric cars (2) each having wheels (6) supported by the guide rails (1A, 1B) and guided therealong;
a driving system (9) located in each electric car (2) so as to drive the electric car (2); and
a power supply system (9) for the driving system of an electric car on each car passage, wherein the respective supply systems are constructed as non-contact type power sources and comprise pairs of induction wire lines (21) associated with at least one the guide rails which are connected in series one to another and electrically connected to a common panel board (53).

9. A transporting system as defined in claim 8, wherein the car passages (52a to 52i) are grouped into blocks each consisting of adjacent car passages located one above another, and the pairs of induction wire lines (21) in each block are connected in series one to another and electrically connected to said common panel board (53).

## Patentansprüche

1. Ein Transportsystem, umfassend:
ein Paar linker und rechter Führungsschienen (1A, 1B);
ein elektrischer Transportwagen (2) mit Rädern (6), die durch die Schienen (1A, 1B) getragen und an diesen entlang geführt werden;
ein Antriebssystem (9), um den elektrischen Wagen (2) anzutreiben, wobei das Antriebssystem (9) von einem Linearmotortyp ist und einen Linearmotorkörper (17) umfaßt, der in dem elektrischen Wagen (2) eingebaut ist; und
ein Energieversorgungssystem (10) für das Antriebssystem (9);
dadurch gekennzeichnet, daß
das Antriebssystem (9) einen sekundären Leiter (16) umfaßt, der horizontal nur an einer (1B) der Führungsschienen (1A, 1B) befestigt ist;
der in dem elektrischen Wagen eingebaute Linearmotorkörper (17) dem sekundären Leiter (16) gegenüberliegend angeordnet ist;
das Energieversorgungssystem (10) als eine kontaktlose Energieversorgung ein Paar Induktionsdrahtleitungen (21) umfaßt, die an und entlang der anderen Führungsschiene (1A) befestigt sind, gegenüberliegend der einen Führungsschiene (1B), an der der sekundäre Leiter (16) befestigt ist; und
zumindest eine Induktionsspule (22) bereitgestellt ist, um dazwischen einzugreifen, wobei die Induktionsdrahtleitungen (21) horizontal Seite an Seite und parallel miteinander angeordnet sind, und die Induktionsspule (22) am elektrischen Wagen (2) befestigt ist, und durch diesen getragen wird.

2. Ein Transportsystem nach Anspruch 1,
dadurch gekennzeichnet, daß der elektrische Transportwagen (2) zwei Paare von vorderen und hinteren Positionierungswalzen (7a, 7b, 7c, 7d) umfaßt, die auf beiden lateralen Seiten des elektrischen Wagens so angeordnet sind, daß sie in Rotationskontakt mit inneren senkrechten Endoberflächen der linken und rechten Führungsschiene gehalten werden, wobei ein Paar der Positionierungswalzen (7a, 7b) auf einer lateralen Seite neben der dem Energieversorgungssystem (10) zugeordneten Führungsschiene (1A) angeordnet sind und in ihrer festen transversalen Position gehalten werden, wohingegen das andere Paar von Vorder- und Hinterwalzen (7c, 7d) auf der anderen lateralen Seite neben der anderen, dem Antriebssystem (9) zugeordneten Führungsschiene (1B) angeordnet sind, und durch jeweilige Federn (26) so gegen die Führungsschiene (1B) gedrückt werden, daß sie horizontal innerhalb eines erlaubten Bereichs transversal zum elektrischen Wagen (2) beweglich sind.

3. Ein Transportsystem nach Anspruch 2,
dadurch gekennzeichnet, daß jede der Führungsschienen (1A, 1B) einen L-förmigen Querschnitt aufweist, und aus einem senkrechten Netzabschnitt (4), der mit einem festen Tragebauteil verbunden ist, und einem horizontaler Schienenabschnitt (5), der sich von einem niedrigeren Ende des vertikalen Abschnitts (4) erstreckt, besteht, wobei die oberen Oberflächen der horizontalen Schienenabschnitte (5) so angeordnet sind, daß sie dem sekundären Leiter (16) des Antriebssystems (9) und die Induktionsleitungen (21) des Energieversorgungssystems (10) tragen, die Räder (6) des elektrischen Wagens (2) auf den oberen Endoberflächen (4a) der vertikalen Abschnitte (4) rollen, und jede der Positionierungswalzen (7a, 7b, 7c, 7d) in einem Rotationskontakt mit einer inneren senkrechten Endoberfläche (4b) des entsprechenden senkrechten Netzabschnitts (4) gehalten werden.

4. Ein Transportsystem nach Anspruch 2,
dadurch gekennzeichnet, daß jede der Führungsschienen (1A, 1B) einen umgekehrt L-förmigen Querschnitt aufweist, und aus einem vertikalen Netzabschnitt (4), der an einem festen Tragebauteil befestigt ist, und einem horizontalen Schienenabschnitt (5), der sich von einem oberen Ende des vertikalen Abschnitts (4) erstreckt, besteht, wobei der sekundäre Leiter (16) des Antriebssystems (9) und die Induktionsleitungen (21) des Energieversorgungssystems (10) unterhalb der horizontalen Schienenabschnitte (5) angeordnet sind, wobei deren obere Oberflächen die Räder (6) des elektrischen Wagens tragen, und jede der Positionierungswalzen (7a, 7b, 7c, 7d) in einem Rotationskontakt mit einer inneren vertikalen Endoberfläche (5a) des entsprechenden horizontalen Schienenabschnitts (5) gehalten wird.

5. Ein Transportsystem nach einem der vorhergehenden Ansprüche, weiter gekennzeichnet durch eine Basisplatte (18), die den linearen Motorkörper (17) hält, und sich längsgerichtet zur Führungsschiene (1B) erstreckt;
Abstandswalzen (19), die drehbar mit der Basisplatte (18) verbunden sind, um einen Abstand zwischen dem Linearmotorkörper (17) und dem sekundären Leiter (16) konstant zu halten; und
aufrechte Führungsstäbe (20), die auch an der Basisplatte (18) befestigt sind, und vertikal in einem Rahmenboden (2a) des elektrischen Wagens (2) eintreten, so daß sie mit bezug auf den Rahmenbodens (2a) nach oben und unten bewegt werden können;
wobei die Abstandsrollen (19) durch jeweilige horizontale Schäfte auf gegenüberliegenden Seiten der Basisplatte (18) und in Abständen längsgerichtet von der Führungsschiene (1B) gelagert sind, und wobei jeder der Führungsstäbe (20) ein freies Ende mit einem daran befestigten Stopper (20a) aufweist, um zu verhindern, daß der Führungsstab (20) vom Rahmenboden (2a) abrutscht.

6. Ein Transportsystem nach Anspruch 5,
dadurch gekennzeichnet, daß der Linearmotorkörper (17) über der Führungsschiene (1B) angeordnet ist, wobei die Abstandsrollen (19) aufgrund einer Schwerkraft gegen eine obere Oberfläche der Führungsschiene (1B) gehalten werden.

7. Ein Transportsystem nach Anspruch 5,
dadurch gekennzeichnet, daß der Linearmotorkörper (17) unterhalb der Führungsschiene (1B) angeordnet ist, wobei die Abstandsrollen (19) gegen eine untere Oberfläche der Führungsschiene (1B) aufgrund einer magnetischen Anziehungskraft gehalten werden.

8. Ein Transportsystem nach einem der Ansprüche 1-7, für eine Installation in einem automatischen Warenhaus, umfassend:
eine Vielzahl von Wagenpassagen (52a-52i);
ein Paar von linken und rechten Führungsschienen (1A, 1B), die sich entlang jeder Wagenpassage erstrecken;
eine Vielzahl von elektrischen Transportwagen (2), jeder mit Rädern (6), die durch die Führungsschienen (1A, 1B) getragen und an diesen entlang geführt werden;
ein in jedem elektrischen Wagen (2) angeordnetes Antriebssystem (9), um den elektrischen Wagen (2) anzutreiben; und
ein Energieversorgungssystem (9) für das Antriebssystem eines elektrischen Wagens auf jeder Wagenpassage, wobei die jeweiligen Energieversorgungssysteme als Energiequellen vom kontaktlosen Typ aufgebaut sind, und Paare von Induktionsleitungen 21 einschließen, die mindestens einer der Führungsschienen zugeordnet sind, und die miteinander in Serie verbunden sind, und elektrisch mit einer gemeinsamen Anzeigetafel (53) verbunden sind.

9. Ein Transportsystem nach Anspruch 8,
dadurch gekennzeichnet, daß die Wagenpassagen (52a-52i) in Blöcke gruppiert sind, von denen jeder aus benachbarten Wagenpassagen besteht, die übereinander angeordnet sind, und die Paare von Induktionsleitungen (21) in jedem Block in Serie miteinander verbunden sind, und elektrisch mit der gemeinsamen Anzeigetafel (53) verbunden sind.

## Revendications

1. Dispositif de transport comprenant :
une paire de rails de guidage gauche et droit (1A, 1B);
un véhicule de transport électrique (2) possédant des roues (6) supportées par les rails (1A, 1B) et guidées le long de ceux-ci;
un dispositif d'entraînement (9) destiné à entraîner le véhicule électrique (2), ledit dispositif d'entraînement (9) étant du type moteur linéaire et comprenant un corps de moteur linéaire (17) installé dans ledit véhicule électrique (2); et
un dispositif de fourniture de puissance (10) destiné au dispositif d'entraînement (9);
caractérisé en ce que
ledit dispositif d'entraînement (9) comprend un conducteur secondaire (16) fixé horizontalement seulement sur l'un (1B) des rails de guidage (1A, 1B);
ledit corps de moteur linéaire (17) installé dans le véhicule électrique est disposé de manière à être en face du conducteur secondaire (16);
ledit dispositif de fourniture de puissance (10) comprend en tant que source de puissance sans contact une paire de lignes de fil d'induction (21) fixée sur et le long de l'autre rail de guidage (1A) en face dudit l'un des rails de guidage (1B) sur lequel est fixé le conducteur secondaire (16); et
au moins une bobine d'induction (22) est prévue pour intervenir entre elles, les lignes de fil d'induction (21) étant disposées horizontalement côte à côte et en parallèle l'une avec l'autre, ladite bobine d'induction (22) étant fixée sur ledit véhicule électrique (2) et portée par celui-ci.

2. Système de transport selon la revendication 1, dans lequel le véhicule de transport électrique (2) comprend deux paires de rouleaux de positionnement avant et arrière (7a, 7ab, 7c, 7d) disposés sur les deux côtés latéraux du véhicule électrique de manière à être maintenus en contact tournant avec les surfaces d'extrémité verticales des rails de guidage gauche et droit, dans lequel l'une des paires de rouleaux de positionnement (7a, 7b) qui se trouve sur l'un des côtés latéraux est située au voisinage du rail de guidage (1A) associé au dispositif de fourniture de puissance (10), et elle est maintenue dans sa position transversale fixe, alors que l'autre paire de rouleaux avant et arrière (7c, 7d) qui se trouve sur l'autre côté latéral est située au voisinage de l'autre rail de guidage (1B) associé au dispositif d'entraînement (9), et elle est poussée vers le rail de guidage (1B) par des ressorts respectifs (26) de manière à pouvoir être déplacée dans la direction horizontale à l'intérieur d'une plage autorisée, transversalement par rapport au véhicule électrique (2).

3. Dispositif de transport selon la revendication 2, dans lequel chacun des rails de guidage (1A, 1B) a une section en forme de L et est composé d'une partie verticale formant âme (4) fixée sur un élément de support fixe, et d'une partie horizontale formant rail (5) s'étendant depuis une extrémité inférieure de la partie verticale (4), dans lequel les surfaces supérieures des parties horizontales formant rail (5) sont agencées pour supporter le conducteur secondaire (16) du dispositif d'entraînement (9) ainsi que les lignes de fil d'induction (21) du dispositif de fourniture de puissance (10), dans lequel les roues (6) du véhicule électrique (2) roulent sur les surfaces d'extrémité supérieures (4a) des parties verticales (4), et dans lequel chacun des rouleaux de positionnement (7a, 7b, 7c, 7d) est maintenu en contact de rotation avec une surface d'extrémité intérieure verticale (4b) de la partie verticale correspondante formant âme (4).

4. Dispositif de transport selon la revendication 2, dans lequel chacun des rails de guidage (1A, 1B) a une section en forme de L inversé et est composé d'une partie verticale formant âme (4) fixée sur un élément de support fixe, et d'une partie horizontale formant rail (5) s'étendant depuis une extrémité supérieure de la partie verticale (4), dans lequel le conducteur secondaire (16) du dispositif d'entraînement (9) ainsi que les lignes de fil d'induction (21) du dispositif de fourniture de puissance (10) sont disposés en dessous de la partie horizontale formant rail (5), dont les surfaces supérieures supportent les roues du véhicule électrique (6), et dans lequel chacun des rouleaux de positionnement (7a, 7b, 7c, 7d) est maintenu en un contact de rotation avec une surface d'extrémité intérieure verticale (5a) de la partie horizontale correspondante formant rail (5).

5. Dispositif de transport selon l'une quelconque des revendications précédentes, comprenant en outre :
une plaque d'appui (18) supportant le corps de moteur linéaire (17) et s'étendant dans la direction longitudinale du rail de guidage (1B);
des rouleaux d'écartement (19) fixés, de façon à pouvoir tourner, sur la plaque d'appui (18) pour maintenir constante une distance entre le corps de moteur linéaire (17) et le conducteur secondaire (16); et
des tiges de guidage verticales (20) fixées également sur la plaque d'appui (18) et pénétrant verticalement dans la partie inférieure du châssis (2a) du véhicule électrique (2) de manière à pouvoir être déplacées de haut en bas par rapport à la partie inférieure du châssis (2a);
dans lequel les rouleaux d'écartement (19) sont montés à tourillon au moyen d'arbres horizontaux respectifs sur les côtés opposés de la plaque d'appui (18) et à des intervalles dans la direction longitudinale du rail de guidage (1B), et dans lequel chacune des tiges de guidage (20) possède une extrémité libre ayant un tampon (20a) fixé sur celle-ci pour empêcher que le rail de guidage (20) glisse en dehors de la partie inférieure du châssis (2a).

6. Dispositif de transport selon la revendication 5, dans lequel le corps du moteur linéaire (17) est placé au-dessus du rail de guidage (1B), les rouleaux d'écartement (19) s'appuyant contre une surface supérieure du rail de guidage (1B) grâce à la force de pesanteur.

7. Dispositif de transport selon la revendication 5, dans lequel le corps de moteur linéaire (17) est placé en dessous du rail de guidage (1B), les rouleaux d'écartement (19) s'appuyant contre une surface inférieure du rail de guidage (1B) grâce à l'attraction magnétique.

8. Dispositif de transport selon l'une quelconque des revendications 1 à 7, prévu pour être installé dans un magasin automatisé et comprenant :
une pluralité de passages de véhicules (52a à 52i);
une paire de rails de guidage gauche et droit (1A, 1B) s'étendant le long de chaque passage de véhicule;
une pluralité de véhicules de transport électrique (2), chacun possédant des roues (6) supportées par les rails de guidage (1A, 1B) et guidées le long de ceux-ci;
un dispositif d'entraînement (9) situé dans chaque véhicule électrique (2) de manière à entraîner le véhicule électrique (2); et
un dispositif de fourniture de puissance (9) destiné au dispositif d'entraînement d'un véhicule électrique situé sur chaque passage de véhicule, dans lequel les dispositifs respectifs de fourniture de puissance ont une structure de source de puissance du type sans contact et comprennent des paires de lignes de fil d'induction (21) associées à au moins l'un des rails de guidage, lesquelles sont reliées en série l'une avec l'autre et sont connectées électriquement à un tableau de commande commun (53).

9. Dispositif de transport selon la revendication 8, dans lequel les passages de véhicule (de 52a à 52i) sont regroupés en bloc composé chacun de passages de véhicule adjacents situés l'un au-dessus de l'autre, et dans lequel les paires de lignes de fil d'induction (21) qui se trouvent dans chaque bloc sont connectées en série les unes avec les autres et sont connectées électriquement audit tableau de commande commun (53).
